# FASCICULE DE BREVET EUROPEEN

(11) **EP 3 172 081 B1**
(45) Date de publication et mention de la délivrance du brevet: **18.09.2019**
(21) Numéro de dépôt: 15742337.7
(22) Date de dépôt: 24.06.2015
(51) Int. Cl.: B60N 2/16, B60N 2/60

(54) **DISPOSITIF DE REHAUSSE D'UN SIÈGE DE VÉHICULE, À PIÈCE D'ENTRETOISE POUR LA TRANSMISSION DE ROTATION ET LE TRANSFERT D'EFFORTS**
VORRICHTUNG ZUM ANHEBEN EINES FAHRZEUGSITZES, MIT EINEM ABSTANDSHALTERTEIL ZUR ÜBERTRAGUNG VON ROTATION UND ZUR ÜBERTRAGUNG VON KRAFT
DEVICE FOR RAISING A VEHICLE SEAT, HAVING A SPACER PART FOR TRANSMITTING ROTATION AND TRANSFERRING FORCES

(30) Priorité: 23.07.2014 FR 1457104
(43) Date de publication de la demande: 31.05.2017
(73) Titulaire: PSA Automobiles SA, 78300 Poissy (FR)
(72) Inventeur: FOMPERINE, Stephan, F-94440 Villecresnes (FR); VERCAYGNE-BAT, Guy Noel, F-78370 Plaisir (FR)
(86) Numéro de dépôt international: PCT/FR2015/051701
(87) Numéro de publication internationale: WO 2016/012679

(56) Documents cités:
- DE-B3-102007 048 438
- JP-A- 2010 057 524
- US-A1- 2012 313 408

## Description

L'invention concerne les dispositifs de rehausse qui équipent certains sièges de véhicules. Un exemple d'un tel dispositif de rehausse, issu de l'art antérieur, est divulgué dans la publication US 2012/313408 A1.

Dans ce qui suit, on entend par « siège » un équipement comprenant une assise, destinée à être montée directement ou indirectement (via des piètements et/ou des glissières) sur un support (comme par exemple un plancher de véhicule, éventuellement de type automobile), et au moins un dossier, éventuellement monté à rotation (éventuellement sur l'assise). Par conséquent, l'invention concerne aussi bien les sièges de type monoplace que les sièges de type banquette. Elle concerne également les sièges disposant d'un dossier basculant.

Certains sièges de véhicule comprennent une armature d'assise solidarisée à un dispositif de rehausse destiné à permettre à un usager de faire varier leur position verticale (ou hauteur) par rapport au plancher. Les dispositifs de rehausse connus comprennent généralement un module de rehausse couplé à une commande (manuelle) latérale. Le module de rehausse est solidarisé à l'armature d'assise du siège et propre faire varier la position verticale de cette armature d'assise lorsqu'une partie rotative qu'il comprend est entraînée en rotation. La commande (manuelle) passe au travers d'un carter latéral du siège, chargé de masquer au moins le module de rehausse, et est solidarisée à la partie rotative du module de rehausse soit directement, soit indirectement via une pièce d'interface. Cette commande est destinée à provoquer la rotation de la partie rotative du module de rehausse lorsqu'elle est entraînée en rotation par la main d'un usager.

Dans certains véhicules, une partie de la sangle de la ceinture de sécurité, qui est associée à un siège avec réglage en hauteur (par exemple un dispositif de rehausse) passe en biais devant le carter latéral de ce siège, à une très faible distance, voire contre lui. Par conséquent, lorsque l'usager assis sur ce siège se déplace brusquement suivant la direction longitudinale, consécutivement à un puissant freinage ou un choc, la partie précitée de la sangle qui le protège se retrouve plaquée fortement contre le carter latéral, ce qui provoque son écrasement contre le module de rehausse et/ou une partie de liaison de la commande (ou de l'éventuelle pièce d'interface). Il peut en résulter des détériorations irréversibles du carter latéral (fissure(s) locale(s), casse partielle ou totale), qui imposent alors son remplacement, alors même que le siège n'est pas forcément endommagé. Cette détérioration du carter entraîne en outre un risque sécuritaire d'éjection de particules plastiques dans l'habitacle et/ou de coupure de la ceinture au cours du choc.

Afin de limiter le risque de détérioration irréversible, il a été proposé de renforcer le carter latéral par un réseau de nervures et/ou de définir des contre-appuis sur la partie de liaison de la commande ou sur l'éventuelle pièce d'interface. Hélas, la réalisation des réseaux de nervures et des contre-appuis impose l'utilisation de moules d'une grande complexité, et la tenue aux efforts dépend de la faisabilité de la commande ou de l'éventuelle pièce d'interface.

Il a également été proposé de rapporter des entretoises sur le carter latéral ou sur l'armature d'assise. Cependant, un tel ajout entraîne une augmentation du prix du véhicule et de la durée de l'assemblage, et la gestion de nouvelles pièces en usine et dans les services après-vente. En outre, ces entretoises rapportées peuvent induire des bruits plus ou moins gênants selon le matériau qui les constitue.

L'invention a donc pour but d'améliorer la situation.

Elle propose notamment à cet effet un dispositif de rehausse, destiné à équiper un siège de véhicule, et comprenant un module de rehausse, solidarisé à une armature d'assise du siège et propre à faire varier la position verticale de l'armature d'assise lorsqu'une partie rotative qu'il comprend est entraînée en rotation, et une commande, destinée à passer au travers d'un carter latéral du siège, propre à masquer le module de rehausse, et agencée pour provoquer la rotation de cette partie rotative lorsqu'elle est entraînée en rotation par un usager.

Ce dispositif de rehausse se caractérise par le fait qu'il comprend également une pièce d'entretoise, destinée à être placée entre le carter latéral et la partie rotative en étant solidarisée fixement à cette dernière et à la commande pour transmettre sa rotation à la partie rotative du module de rehausse, et agencée de manière à constituer un contre-appui rigide limitant la déformation du carter latéral lorsqu'elle est plaquée contre le module de rehausse par le carter latéral lors d'une déformation de ce dernier induite par un plaquage d'une sangle d'une ceinture de sécurité associée au siège, afin de transférer au module de rehausse une partie au moins des efforts de plaquage subis par le carter latéral.

Ainsi, lors du plaquage du carter latéral contre la pièce d'entretoise, la reprise d'effort est assurée par cette dernière lors de son contre-appui contre le module de rehausse. Ce contre-appui permet de ne pas faire travailler le matériau du carter latéral dans sa zone de limite élastique, et donc d'éviter qu'il fasse l'objet de détériorations irréversibles.

Le dispositif selon l'invention peut comporter d'autres caractéristiques qui peuvent être prises séparément ou en combinaison, et notamment :
- sa pièce d'entretoise peut comprendre des protubérances propres à la rigidifier en cas d'appui contre le module de rehausse ;
   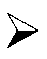 les protubérances peuvent faire partie d'un réseau de nervures ;
- sa commande peut comprendre des premiers moyens de clippage, et sa pièce d'entretoise peut comprendre des seconds moyens de clippage coopérant avec les premiers moyens de clippage pour assurer la solidarisation fixe de sa commande ;
   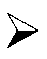 sa pièce d'entretoise peut comprendre un passage agencé pour permettre un accès d'une extrémité d'un outil de démontage aux seconds moyens de clippage, de manière à désolidariser sa commande.

L'invention propose également un siège comprenant un carter latéral et une armature d'assise couplée à un dispositif de rehausse du type de celui présenté ci-avant.

L'invention propose également un véhicule, éventuellement de type automobile, et comprenant au moins un siège du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes et les niveaux de gris), sur lesquels :
- la figure 1 illustre schématiquement, dans une vue en perspective, les éléments d'un dispositif de rehausse selon l'invention avant qu'ils ne soient assemblés entre eux et couplés à une armature d'assise et un carter latéral d'un siège de véhicule,
- la figure 2 illustre schématiquement, dans une vue en perspective du côté avant, le dispositif de rehausse de la figure 1, une fois ses éléments assemblés entre eux et couplés à une armature d'assise et un carter latéral d'un siège de véhicule, et pendant un choc,
- la figure 3 illustre schématiquement, dans une vue en coupe dans un plan YZ, le dispositif de rehausse de la figure 1, une fois ses éléments assemblés entre eux et couplés à une armature d'assise et un carter latéral d'un siège de véhicule, et avant un choc,
- la figure 4 illustre schématiquement, dans une vue en coupe dans un plan YZ, le dispositif de rehausse de la figure 1, une fois ses éléments assemblés entre eux et couplés à une armature d'assise et un carter latéral d'un siège de véhicule, et pendant un choc, et
- la figure 5 illustre schématiquement, dans une vue en perspective et partiellement en transparence, un exemple de solidarisation de la commande du dispositif de rehausse de la figure 1 à la pièce d'entretoise de ce dispositif de rehausse.

L'invention a notamment pour but de proposer un dispositif de rehausse D destiné à équiper un siège rehaussable SI d'un véhicule.

On considère dans ce qui suit, à titre d'exemple non limitatif, que le siège SI est destiné à équiper un véhicule de type automobile, comme par exemple une voiture. Mais l'invention n'est pas limitée à ce type de véhicule. Elle concerne en effet tout véhicule comportant au moins un support (comme par exemple un plancher) sur lequel peut être installé au moins un siège rehaussable. Par conséquent, l'invention concerne notamment les véhicules terrestres (y compris les tramways et les trains), les véhicules maritimes (ou fluviaux), et les aéronefs.

Par ailleurs, on considère dans ce qui suit, à titre d'exemple non limitatif, que le siège SI est de type monoplace. Mais l'invention n'est pas limitée à ce type de siège. Elle concerne en effet tout type de siège pouvant accueillir, en position assise, au moins une personne. Par conséquent, il pourra également s'agir d'une banquette comportant au moins un dossier.

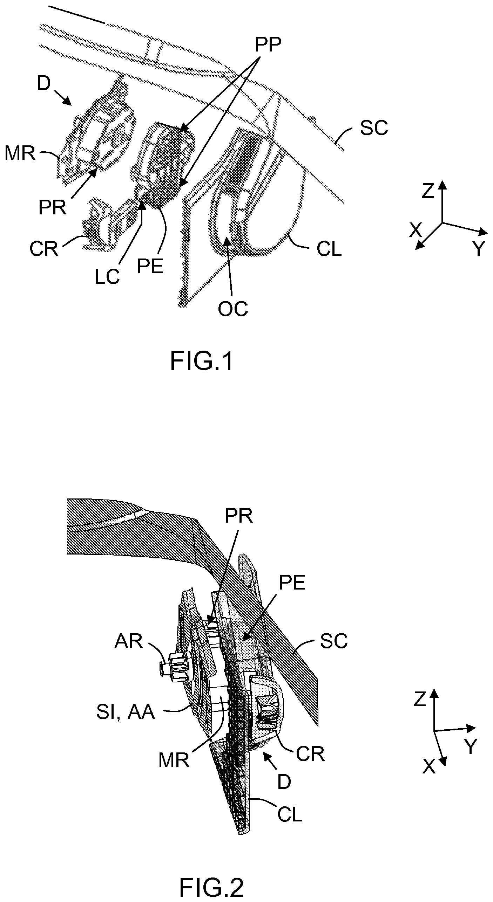

On a schématiquement illustré sur les figures 1 et 2 un exemple de réalisation d'un dispositif de rehausse D selon l'invention, respectivement avant qu'il ne soit couplé à une armature d'assise AA d'un siège SI de véhicule et après qu'il ait été couplé à une telle armature d'assise AA.

Sur les figures 1 à 5, la direction X est la direction longitudinale du véhicule (et donc du siège SI), laquelle est sensiblement parallèle aux côtés latéraux comportant les portières latérales, la direction Y est la direction transversale du véhicule, laquelle est perpendiculaire à la direction X, et la direction Z est la direction verticale du véhicule, laquelle est perpendiculaire aux directions longitudinale X et transversale Y.

L'armature d'assise AA, très partiellement illustrée sur les figures 2 à 4, est destinée à faire partie d'une assise d'un siège rehaussable SI. Cette assise est destinée à être associée (éventuellement couplée) à un dossier (non représenté). Par ailleurs, cette assise est par exemple montée indirectement (via des piètements et/ou des glissières) sur un plancher d'un véhicule.

Le dossier peut être monté à rotation (éventuellement sur l'assise). Mais cela n'est pas obligatoire.

Comme illustré non limitativement sur les figures 1 et 2, un dispositif de rehausse D, selon l'invention, comprend un module de rehausse MR, une commande (manuelle) CR et une pièce d'entretoise PE.

Le module de rehausse MR comprend une partie fixe solidarisée à l'armature d'assise AA (voir figures 2 à 4) et une partie rotative PR couplée à la partie fixe, montée à rotation sur un axe AR sensiblement parallèle à la direction transversale Y et propre à faire varier la position verticale (suivant la direction Z) de l'armature d'assise AA (et donc du siège SI) lorsqu'elle (PR) est entraînée en rotation autour de la direction transversale Y.

Comme illustré sur la figure 1, la commande CR est destinée à passer au travers d'une ouverture OC d'un carter latéral CL du siège SI qui s'étend sensiblement suivant la direction longitudinale X et qui est propre à masquer au moins le module de rehausse MR ainsi que de préférence l'ensemble de l'armature d'assise AA. Cette commande CR constitue une espèce de manette (ou levier) agencé(e) pour provoquer la rotation de la partie rotative PR du module de rehausse MR lorsqu'elle est entraînée en rotation par une main d'un usager dans un plan sensiblement parallèle au plan XZ.

On notera que le carter latéral CL est situé dans une zone du véhicule dans laquelle est temporairement logée une partie de la sangle SC de la ceinture de sécurité qui est associée au siège SI lorsqu'un usager est assis sur ce dernier avec la ceinture bouclée (ou verrouillée). Plus précisément, cette partie de la sangle SC passe en biais devant le carter latéral CL, à une très faible distance, voire contre lui.

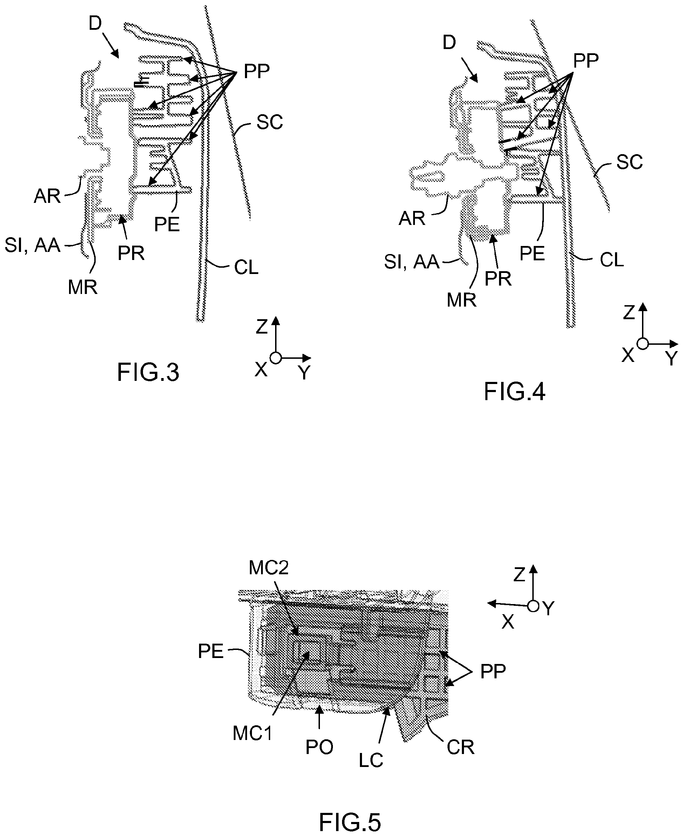

La pièce d'entretoise PE est destinée à être placée entre le carter latéral CL et la partie rotative PR du module de rehausse MR en étant solidarisée fixement à cette partie rotative PR et à la commande (manuelle) CR pour transmettre sa rotation à la partie rotative PR. Comme illustré sur les figures 3 et 4, cette pièce d'entretoise PE est agencée de manière à constituer un contre-appui rigide limitant la déformation du carter latéral CL lorsqu'elle est plaquée contre le module de rehausse MR par le carter latéral CL lors d'une déformation de ce dernier (CL) induite par un plaquage de la sangle SC provoqué par un déplacement brusque de l'usager assis suivant la direction longitudinale X, consécutivement à un puissant freinage ou un choc. Cette déformation de la pièce d'entretoise PE est destinée à permettre un transfert au module de rehausse MR d'une partie au moins des efforts de plaquage qui sont subis par le carter latéral CL.

Ainsi, la pièce d'entretoise PE assure une reprise d'effort lors du plaquage du carter latéral CL contre elle (PE), lors de son contre-appui contre le module de rehausse MR. Ce contre-appui permet de ne pas faire travailler le matériau du carter latéral CL dans sa zone de limite élastique, et donc d'éviter qu'il fasse l'objet de détériorations irréversibles, ce qui évite avantageusement d'avoir à le remplacer, ou d'avoir des particules éjectées ou une ceinture coupée consécutivement à un puissant freinage ou un choc.

La pièce d'entretoise PE peut, par exemple, être solidarisée fixement à la partie rotative PR du module de rehausse MR au moyen de vis.

Par ailleurs, cette pièce d'entretoise PE peut, par exemple, être réalisée par moulage d'une matière plastique, comme par exemple, mais non limitativement, le PA66-GF30 ou l'ABS. D'une manière générale la matière est choisie en fonction de la tenue demandée de la pièce d'entretoise PE sur son support et/ou d'autres contraintes (par exemple imposées par le milieu environnant).

On notera qu'en l'absence de choc il est préférable de prévoir un léger espace de jeu fonctionnel entre le carter latéral CL et la pièce d'entretoise PE. De même, en l'absence de choc il est préférable de prévoir un léger espace de jeu fonctionnel entre le carter latéral CL et la commande CR (au niveau de l'ouverture OC.

Comme illustré non limitativement sur les figures 1 et 3 à 5, la pièce d'entretoise PE peut comprendre des protubérances PP propres à la rigidifier en cas d'appui contre le module de rehausse MR. C'est cette rigidification à l'aide des protubérances PP qui permet le transfert des efforts de plaquage au module de rehausse MR. Ces protubérances PP peuvent être définies sur la face qui est orientée vers le module de rehausse MR et/ou sur la face qui est orientée vers le carter latéral CL et donc opposée au module de rehausse MR.

Par exemple, et comme illustré non limitativement sur les figures 1 et 3 à 5, les protubérances PP peuvent faire partie d'un réseau de nervures dont la hauteur est éventuellement variable. On notera que dans cet exemple non limitatif les nervures sont définies sur la face qui est orientée vers le module de rehausse MR et sur la face qui est orientée vers le carter latéral CL.

La solidarisation fixe de la commande (manuelle) CR à la pièce d'entretoise PE peut, par exemple, se faire au moyen de premiers MC1 et second MC2 moyens de clippage coopérant ensemble et définis respectivement sur une partie de liaison de la commande CR (masquée par le carter latéral CL) et sur la pièce d'entretoise PE, comme illustré non limitativement sur la figure 5. Dans cet exemple, les premiers moyens de clippage MC1 sont agencés sous la forme d'une protubérance définissant un cran à pan incliné. Les seconds moyens de clippage MC2 sont, ici, agencés sous la forme d'une patte flexible définie dans une découpe de la pièce d'entretoise PE et comportant un trou traversant destiné à loger étroitement le cran à pan incliné MC1 tout en le retenant suivant la direction longitudinale X une fois qu'il a été introduit dedans consécutivement à une translation longitudinale de la partie de liaison de la commande CR dans un logement dédié LC de la pièce d'entretoise PE (voir figures 1 et 5).

Afin de permettre la désolidarisation de la commande CR de la pièce d'entretoise PE, cette dernière (PE) peut avantageusement comprendre un passage PO agencé pour permettre un accès d'une extrémité d'un outil de démontage aux seconds moyens de clippage MC2. Dans l'exemple illustré non limitativement sur la figure 5, le passage PO communique avec la découpe de la pièce d'entretoise PE dans laquelle est définie la patte flexible MC2. On comprendra qu'en écartant la patte flexible MC2 du cran à pan incliné MC1 au moyen de l'extrémité de l'outil de démontage, on libère ce cran à pan incliné MC1 et donc on permet de nouveau la translation longitudinale de la commande CR en vue de sa désolidarisation de la pièce d'entretoise PE.

## Revendications

1. Dispositif de rehausse (D) pour un siège (SI) de véhicule, ledit dispositif (D) comprenant un module de rehausse (MR), apte à être solidarisé à une armature d'assise (AA) dudit siège (SI) et propre à faire varier la position verticale de ladite armature d'assise (AA) lorsqu'une partie rotative (PR) qu'il comprend est entraînée en rotation, et une commande (CR), destinée à passer au travers d'un carter latéral (CL) dudit siège (SI), propre à masquer ledit module de rehausse (MR), et agencée pour provoquer la rotation de ladite partie rotative (PR) lorsqu'elle est entraînée en rotation par un usager, **caractérisé en ce qu'**il comprend en outre une pièce d'entretoise (PE) destinée à être placée entre ledit carter latéral (CL) et ladite partie rotative (PR) en étant solidarisée fixement à cette dernière (PR) et à ladite commande (CR) pour transmettre sa rotation à ladite partie rotative (PR), et agencée de manière à constituer un contre-appui rigide limitant la déformation dudit carter latéral (CL) lorsqu'elle est plaquée contre ledit module de rehausse (MR) par ledit carter latéral (CL) lors d'une déformation de ce dernier (CL) induite par un plaquage d'une sangle (SC) d'une ceinture de sécurité associée audit siège, afin de transférer audit module de rehausse (MR) une partie au moins des efforts de plaquage subis par ledit carter latéral (CL).

2. Dispositif selon la revendication 1, **caractérisé en ce que** ladite pièce d'entretoise (PE) comprend des protubérances (PP) propres à la rigidifier en cas d'appui contre ledit module de rehausse (MR).

3. Dispositif selon la revendication 2, **caractérisé en ce que** lesdites protubérances (PP) font partie d'un réseau de nervures.

4. Dispositif selon l'une des revendications 1 à 3, **caractérisé en ce que** ladite commande (CR) comprend des premiers moyens de clippage (MC1), et ladite pièce d'entretoise (PE) comprend des seconds moyens de clippage (MC2) coopérant avec lesdits premiers moyens de clippage (MC1) pour assurer la solidarisation fixe de ladite commande (CR).

5. Dispositif selon la revendication 4, **caractérisé en ce que** ladite pièce d'entretoise (PE) comprend un passage (PO) agencé pour permettre un accès d'une extrémité d'un outil de démontage auxdits seconds moyens de clippage (MC2), de manière à désolidariser ladite commande (CR).

6. Siège (SI) comprenant une armature d'assise (AA) et un carter latéral (CL), **caractérisé en ce qu'**il comprend en outre un dispositif de rehausse (D) selon l'une des revendications précédentes, solidarisé à ladite armature d'assise (AA).

7. Véhicule, **caractérisé en ce qu'**il comprend au moins un siège (SI) selon la revendication 6.

8. Véhicule selon la revendication 7, **caractérisé en ce qu'**il est de type automobile.

## Patentansprüche

1. Erhöhungsvorrichtung (D) für einen Fahrzeugsitz (SI), wobei die Vorrichtung (D) ein Erhöhungsmodul (MR) umfasst, das geeignet ist, fest mit einer Sitzflächenbewehrung (AA) des Sitzes (SI) verbunden zu sein, und geeignet ist, um die vertikale Position der Sitzflächenbewehrung (AA) variieren zu lassen, wenn ein Drehteil (PR), das es umfasst, in Drehung angetrieben wird, und eine Steuerung (CR), die dazu bestimmt ist, durch eine Seitenverkleidung (CL) des Sitzes (SI) durchzugehen, die geeignet ist, das Erhöhungsmodul (MR) abzudecken, und eingerichtet ist, um die Drehung des Drehteils (PR) hervorzurufen, wenn sie von einem Benutzer in Drehung angetrieben wird, **dadurch gekennzeichnet, dass** sie weiter ein Abstandhalterteil (PE) umfasst, das dazu bestimmt ist, zwischen der Seitenverkleidung (CL) und dem Drehteil (PR) platziert zu sein und fest mit diesem Letzteren (PR) und der Steuerung (CR) verbunden zu sein, um seine Drehung zu dem Drehteil (PR) zu übertragen, und derart eingerichtet ist, dass sie eine starre Gegenauflage bildet, die die Verformung der Seitenverkleidung (CL) einschränkt, wenn sie gegen das Erhöhungsmodul (MR) von der Seitenverkleidung (CL) bei einer Verformung dieser Letzteren (CL), die durch ein Andrücken eines Gurts (SC) eines Sicherheitsgurts induziert wird, der mit dem Sitz assoziiert ist, angedrückt wird, um an das Erhöhungsmodul (MR) mindestens einen Teil der Andrückkräfte, die die Seitenverkleidung (CL) erfährt, zu übertragen.

2. Vorrichtung nach Anspruch 1, **dadurch gekennzeichnet, dass** das Abstandhalterteil (PE) Ausstülpungen (PP) umfasst, die geeignet sind, es bei Aufliegen gegen das Erhöhungsmodul (MR) zu versteifen.

3. Vorrichtung nach Anspruch 2, **dadurch gekennzeichnet, dass** die Ausstülpungen (PP) Teil eines Netzwerks von Rippen sind.

4. Vorrichtung nach einem der Ansprüche 1 bis 3, **dadurch gekennzeichnet, dass** die Steuerung (CR) erste Clipsmittel (MC1) umfasst, und dass das Abstandhalterteil (PE) zweite Clipsmittel (MC2) umfasst, die mit den ersten Clipsmitteln (MC1) zusammenwirken, um die feststehende Verbindung der Steuerung (CR) sicherzustellen.

5. Vorrichtung nach Anspruch 4, **dadurch gekennzeichnet, dass** das Abstandhalterteil (PE) eine Passage (PO) umfasst, die eingerichtet ist, um einen Zugang zu einem Ende eines Demontagewerkzeugs zu den zweiten Clipsmitteln (MC2) derart zu erlauben, dass die Steuerung (CR) gelöst wird.

6. Sitz (SI), der eine Sitzflächenbewehrung (AA) und eine Seitenverkleidung (CL) umfasst, **dadurch gekennzeichnet, dass** er weiter eine Erhöhungsvorrichtung (D) nach einem der vorstehenden Ansprüche umfasst, die mit der Sitzflächenbewehrung (AA) fest verbunden ist.

7. Fahrzeug, **dadurch gekennzeichnet, dass** es mindestens einen Sitz (SI) nach Anspruch 6 umfasst.

8. Fahrzeug nach Anspruch 7, **dadurch gekennzeichnet, dass** es vom Kraftfahrzeugtyp ist.

## Claims

1. Device for raising (D) a vehicle seat (SI), said device (D) comprising a raising module (MR), able to be connected to a seat part armature (AA) of the seat (SI) and suitable for varying the vertical position of said seat part armature (AA) when a rotary part (PR) which it comprises is driven in rotation, and a control (CR), designed to pass through a lateral casing (CL) of said seat (SI), able to conceal said raising module (MR), and arranged to cause the rotation of said rotary part (PR) when it is driven in rotation by a user, **characterised in that** it also comprises a spacer part (PE) that is designed to be positioned between said lateral casing (CL) and said rotary part (PR) being fixed securely to the latter (PR) and to said control (CR) so as to transmit its rotation to the rotary part (PR), and arranged to form a rigid counter support limiting the deformation of said lateral casing (CL) when it is pressed against said raising module (MR) by said lateral casing (CL) during a deformation of the latter (CL) brought about by the pressing of a seatbelt strap (SC) associated with said seat, in order to transfer to said raising module (MR) at least a portion of the pressing forces incurred by said lateral casing (CL).

2. Device according to claim 1, **characterised in that** said spacer part (PE) comprises protuberances (PP) which are able to reinforce the latter when bearing against said raising module (MR).

3. Device according to claim 2, **characterised in that** said protuberances (PP) form part of a network of ribs.

4. Device according to any of claims 1 to 3, **characterised in that** said control (CR) comprises first clip-on means (MC1), and said spacer part (PE) comprises second clip-on means (MC2) cooperating with said first clip-on means (MC1) to ensure the secure connection of said control (CR).

5. Device according to claim 4, **characterised in that** said spacer part (PE) comprises a passage (PO) arranged to enable access to one end of a removal tool to said second clip-on means (MC2), so as to disconnect said control (CR).

6. Seat (SI) comprising a seat part armature (AA) and a lateral casing (CL), **characterised in that** it also comprises a raising device (D) according to any of the preceding claims, joined to said seat part armature (AA).

7. Vehicle, **characterised in that** it comprises at least one seat (SI) according to claim 6.

8. Vehicle according to claim 7, **characterised in that** it is a type of automobile.
